# DEMANDE DE BREVET EUROPEEN

(11) **EP 4 840 540 A1**
(43) Date de publication de la demande: **18.11.2026**
(21) Numéro de dépôt: 26176346.0
(22) Date de dépôt: 04.05.2026
(51) Int. Cl.: B01J 20/32, C02F 1/28

(54) **SUPPORTS INORGANIQUES FONCTIONNALISES PAR UNE PROTEINE, LEUR PREPARATION ET LEURS UTILISATIONS, NOTAMMENT POUR L EXTRACTION ET LA RÉCUPÉRATION D ACTINIDES ET DE LANTHANIDES**

(30) Priorité: 05.05.2025 FR 2504764
(71) Demandeur: Commissariat à l'Energie Atomique et aux Energies Alternatives, 75015 Paris (FR); Centre National de la Recherche Scientifique, 75016 Paris (FR); UNIVERSITE DE MONTPELLIER, 34090 Montpellier (FR); Ecole Nationale Supérieure de Chimie de Montpellier, 34090 Montpellier (FR); Université d'Aix Marseille, 13007 Marseille (FR)
(72) Inventeur: WINKLER, Robert, 30290 Laudun-L Ardoise (FR); REBISCOUL, Diane, 30290 Laudun-L Ardoise (FR); BERTHOMIEU, Catherine, 13100 Aix-en-Provence (FR); GIUSTI, Fabrice, 30126 Tavel (FR); ODORICO, Michael, 30500 Saint Ambroix (FR); TSAPI METCHOP, Vanele, 30200 Bagnols sur Cèze (FR)
(74) Mandataire: Gevers & Orès

(57) **Abrégé**

Le domaine technique de la présente invention est notamment celui de l'extraction et la récupération des actinides et des lanthanides, par exemple dans le cadre de la décontamination nucléaire. La présente invention concerne des supports inorganiques fonctionnalisés par une protéine, leur préparation et leurs utilisations, notamment pour l'extraction et/ou la récupération d'actinides et/ou de lanthanides, par exemple présents au sein d'effluents actifs ou non.

## Description

Le domaine technique de la présente invention est notamment celui de l'extraction et la récupération des actinides et des lanthanides, par exemple dans le cadre de la décontamination nucléaire. La présente invention concerne des supports inorganiques fonctionnalisés par une protéine, leur préparation et leurs utilisations, notamment pour l'extraction et/ou la récupération d'actinides et/ou de lanthanides, par exemple présents au sein d'effluents actifs ou non.

Les protéines jouent un rôle central dans une multitude de fonctions biologiques, et leur capacité à interagir avec d'autres atomes ou molécules en fait des outils précieux pour diverses applications scientifiques et industrielles, comme par exemple le traitement de l'eau. A titre d'utilisation, la contamination de l'eau en actinides est un critère de qualité souvent éliminatoire pour sa potabilité (Guidelines for drinking-water quality, Fourth edition incorporating the first and Second addenda. Geneva: World Health Organization, 2022) avec des seuils typiquement très bas (par exemple de 126 nM en uranyle).

Parmi ces protéines, la lanmoduline (LanM) se distingue par ses propriétés uniques de liaison aux ions métalliques, ce qui ouvre la voie à des utilisations innovantes dans le domaine des supports fonctionnalisés. Cette petite protéine de 5 nm (133 acides aminés) et de structure désordonnée est stable en milieux complexes, à la différence de beaucoup d'enzymes qui demandent un control rigoureux du pH et de la salinité. En présence d'actinides ou de lanthanides, la protéine se replie pour ajuster les sites de complexation de forte affinité nécessaires à leur rétention. C'est ce repliement de la chaîne peptidique lors de la complexation qui pilote la sélectivité : la densité de charge des actinides et les lanthanides est telle qu'elle peut fournir l'énergie d'activation nécessaire à ce repliement contrairement à divers ions compétiteur de plus faible densité de charge. En solution aqueuse, la LanM possède des affinités picomolaires sur trois sites de complexation (de 5 à 35 pM) pour les lanthanides et les actinides (Quanhui Ye et al, Environ. Sci. Technol. 2023, 57, 10, 4276-4285 ; Mattocks, J. A. et al, Chem. Sci. 13, 6054-6066 (2022)) et une sélectivité de 5-6 ordres de grandeur supérieure pour les lanthanides comparée à celles de cations compétiteurs classiques tels que Ca²⁺, Cu²⁺ ou Zn²⁺. La LanM présente donc des performances largement supérieures à celle des ligands classiques comme l'EDTA ou le citrate (Quanhui Ye et al, *ibid.*). De plus, selon le pH, la LanM permet d'extraire sélectivement certains actinides plus efficacement que les lanthanides (Mattocks, J. A. et al, *ibid.*). Une simple baisse du pH en dessous de 2.5 permet de relarguer les cations par la protonation des groupements carboxylates complexant (Quanhui Ye et al, *ibid.*). Pour finir, la LanM est issue d'une bioproduction et est composée essentiellement d'atomes CHON (Conseil national de l'industrie. Stratégie nationale bio-production en France Comment développer la bio-production en France ? https://www.economie.gouv.fr/files/files/directions_services/cge/bio-production.pdf (2018)).

Les supports fonctionnalisés par la lanmoduline peuvent ainsi trouver des applications variées, notamment dans les domaines de la biotechnologie, de la médecine et de l'environnement. Par exemple, ils peuvent être utilisés pour la purification de métaux dans les eaux usées, grâce à leur capacité à se lier spécifiquement à ces ions. De plus, ces supports fonctionnalisés peuvent servir de matrices pour l'immobilisation d'enzymes, améliorant ainsi la stabilité et l'efficacité des biocatalyseurs.

Les principaux avantages des supports fonctionnalisés par la lanmoduline incluent leur haute spécificité et affinité pour les ions métalliques, ce qui permet une purification efficace et sélective. Leur capacité à être modifiés chimiquement offre également une grande flexibilité pour des applications spécifiques.

Cependant, ces supports présentent également des inconvénients. Leur production peut être coûteuse, longue et techniquement contraignante et complexe, nécessitant des conditions de préparation précises. Cela est en particulier dû aux exigences spécifiques en termes de conditions de synthèse et de purification des protéines. Les équipements nécessaires pour la production à grande échelle, avec ces problématiques, notamment le rendement de production de la protéine, augmentent également les coûts.

Enfin, la régénération et le recyclage de ces supports peuvent poser des défis techniques et économiques. Les processus de régénération doivent être efficaces pour restaurer la fonctionnalité des supports sans les endommager. De plus, le recyclage peut nécessiter des traitements supplémentaires pour éliminer les contaminants et les produits de dégradation, augmentant ainsi les coûts et la complexité.

Parmi ces supports, des supports organiques de type billes d'agarose ou soie couplée à une protéine recombinante du type élastine ont été considérés.

Ces supports organiques sont généralement biodégradables et biocompatibles, réduisant ainsi leur impact environnemental et leur toxicité.

Cependant, les supports organiques sont peu adaptés aux traitements d'effluents radioactifs puisqu'en fin de vie, leur acceptation en déchets radioactifs est sujet à une réglementation spécifique qui limite le taux d'organiques en présence dans le colis final.

D'autres supports, de type inorganique (nanoparticules magnétiques, Quanhui Ye et al, *ibid.* ; Quanhui Ye et al, ACS Appl. Bio Mater. 2022, 5, 12, 5665-5674), ont été proposés dans ce contexte. Mais les méthodes les utilisant peuvent conduire à une flottation non désirée et une floculation des nanoparticules, notamment dans des effluents organiques et dans des solutions aqueuses à gamme de pH et de force ionique restreintes.

Ainsi, un but de l'invention est de fournir des supports fonctionnalisés permettant l'extraction et/ou la récupération aisée(s) et efficace(s) d'actinides et/ou de lanthanides, par exemple présents au sein d'effluents actifs ou non. Par exemple, dans le cas de l'industrie nucléaire, l'utilisation des supports de l'invention permet de faire diminuer la radioactivité des effluents présentant des émetteurs α (uranium, plutonium, américium, curium) pour ensuite les rendre compatibles avec les seuils d'acceptation d'utilisation de procédés existants. En effet, les supports de l'invention permettent une extraction performante (affinité picomolaire pour des éléments du bloc f) et sélective des lanthanides et des actinides contenus dans tout type de solution (aqueuse et/ou organique). C'est un point particulièrement intéressant lorsque les solutions/effluents à traiter sont hétérogènes et contiennent des éléments compétiteurs. En outre, dans le cadre des déchets nucléaires, la composition du support solide de l'invention est compatible avec la règle « CHON » (dans le secteur nucléaire, la règle CHON empêche l'utilisation de solutions souvent basées sur des phosphates).

Un autre but de l'invention est de mettre à disposition de tels supports à travers un procédé de préparation simple, rapide, hautement chimiosélectif, et permettant d'obtenir des rendements quantitatifs. En effet, le procédé de l'invention permet d'éviter une étape de purification longue et fastidieuse. Le procédé de l'invention comprend de manière alternative une étape de fonctionnalisation réalisable par simple trempage du support dans le lysat contenant la protéine modifiée, permettant à la fois de récupérer et de greffer de manière covalente la protéine directement sur le support solide. Cette méthode permet donc une diminution du nombre d'étapes dans la préparation du support solide fonctionnalisé par la protéine.

Encore un autre but de l'invention est de mettre à disposition des supports fonctionnalisés d'utilisation simple, et versatiles.

Encore un autre but de l'invention est de mettre à disposition des supports fonctionnalisés robustes, stables, mais également réutilisables. En effet, les supports fonctionnalisés de l'invention peuvent être réutilisés plusieurs fois puisqu'après extraction, un simple changement de pH (par exemple à pH < 2.5) de la solution permet la récupération des lanthanides ou des actinides extraits puis la réutilisation. Et la liaison covalente existant entre le support et la protéine permet de rendre le matériau hybride plus résistant, notamment lorsqu'il est en fonctionnement (extraction-désextraction).

Ainsi, selon un premier aspect, l'invention concerne un support inorganique portant à sa surface des groupes -OH fonctionnalisés par des résidus de formule (I) suivante :

-(W)ₘ-L₁-(X)ₙ-(L₂)ₚ-Y-L₃-Z-S₁-S₂-P (I),

dans laquelle:
m est égal à 0 ou 1 ;
n est égal à 0 ou 1 ;
p est égal à 0 ou 1 ;
W représente Si comme suit : 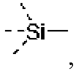
---représentant indépendamment une liaison avec un atome d'oxygène d'un groupe -OH porté par ledit support inorganique ou avec un résidu -OH, l'une au moins des liaisons --- représentant une liaison avec un atome d'oxygène d'un groupe -OH porté par ledit support inorganique ; et - représentant la liaison avec L₁ ;
L₁ est un groupe (C₁-C₂₄)-alcane diyle linéaire ou branché, optionnellement interrompu par au moins un atome ou groupe choisi parmi -O-, -NR-, -S-, -C(=O)-, -O-C(=O)-, -C(=O)-O-, -NR-C(=O)-, -C(=O)-NR-, -NR-C(=O)-NR'-, -NR-C(=S)-NR'-, -NR-C(=O)-O-, -O-C(=O)-NR'-; - C(R)=C(R')-, -C=C-, et les arène diyles, en particulier benzène diyl, R et R' étant indépendamment H ou un groupe (C₁-C₆)-alkyle linéaire ou branché ;
X est choisi parmi -S-, -NR''-, R'' étant H ou un groupe (C₁-C₆)-alkyle linéaire ou branché, -O-,-C(=O)-, -O-C(=O)-, -C(=O)-O-, -NR-C(=O)-, -C(=O)-NR-, -NR-C(=O)-NR'-, -NR-C(=O)-O-,-O-C(=O)-NR'-; -C(R)=C(R')-, et -C=C-; -NR-C(=S)-NR'-, R et R' étant indépendamment H ou un groupe (C₁-C₆)-alkyle linéaire ou branché ;
Y est un groupe triazole diyle ou un groupe diyle comprenant un groupe triazole, par exemple un groupe triazole fusionné à un groupe cycloalkyle éventuellement substitué, notamment choisi parmi : 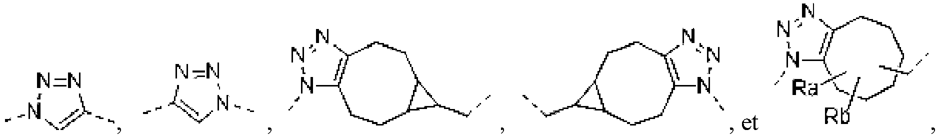 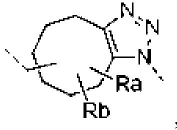 , avec Ra et Rb étant indépendamment H ou F, en particulier 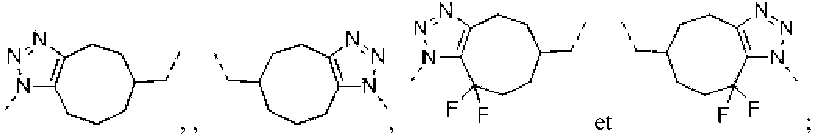
L₃ est un groupe (C₁-C₂₄)-alcane diyle linéaire ou branché ;
Z représente -C(=O)-O- ;
S₁ est une séquence peptidique de reconnaissance de la N-myristoyl transférase (NMT), Z étant en particulier en position N-terminale de S₁ ;
S₂ est un espaceur peptidique;
P est une partie protéique capable de lier un actinide ou un lanthanide.

Selon un mode de réalisation particulier, W représente Si comme suit : 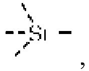 ---représentant une liaison avec un atome d'oxygène d'un groupe -OH porté par ledit support inorganique ou avec un résidu -OH, et -représentant la liaison avec L₁.

Selon un mode de réalisation particulier, W représente Si comme suit : 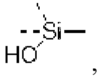 ---représentant une liaison avec un atome d'oxygène d'un groupe -OH porté par ledit support inorganique ou avec un résidu -OH, et -représentant la liaison avec L₁.

Selon un mode de réalisation particulier, W représente Si comme suit : 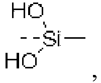 ---représentant une liaison avec un atome d'oxygène d'un groupe -OH porté par ledit support inorganique ou avec un résidu -OH, et -représentant la liaison avec L₁.

Selon un mode de réalisation particulier, lesdits résidus sont de formule (I₁) suivante :

-W-L₁-X-Y-L₃-Z-S₁-S₂-P (I₁).

Selon un mode de réalisation particulier, lesdits résidus sont de formule (I₂) suivante :

-L₁-Y-L₃-Z-S₁-S₂-P (I₂).

Selon un mode de réalisation particulier, le support selon l'invention est constitué de ou comprend un matériau choisi parmi SiO₂, TiO₂, ZrO₂ et alumine.

Selon un mode de réalisation particulier, le support selon l'invention est sous la forme d'un monolithe, en particulier un monolithe poreux, d'une membrane, d'une poudre, notamment une pluralité de microparticules, de granules, ou de sphères. Ces supports sont par exemple susceptibles d'être utilisés dans une colonne, notamment de chromatographie.

Par exemple, ces supports ne sont pas susceptibles d'être emportés par la solution à traiter lors de l'extraction et/ou de la récupération, sans qu'il soit par exemple nécessaire d'avoir recours à des particules magnétiques.

Selon un mode de réalisation particulier, la partie protéique capable de lier un actinide ou un lanthanide comprend 2, 3 ou 4 motifs main EF, au moins un des motifs main EF ayant au moins 2 acides aminés dont la chaîne latérale porte un groupe acide carboxylique, et dans lesquels au moins 2 motifs main EF adjacents sont séparés par 10 à 15 acides aminés, tels que 11, 12, 13, 14 et 15 acides aminés, par exemple, 12 ou 13 acides aminés.

La main EF (ou EF Hand en anglais) est un motif structurel bien connu de l'homme du métier, constitué de l'association deux hélices α liées à une boucle formée d'une douzaine d'acides aminés. Sans vouloir se restreindre à une quelconque théorie, une partie protéique comprenant 2, 3 ou 4 motifs main EF, comprend autant de mains dans laquelle l'actinide ou le lanthanide se situerait dans la paume et les deux hélices formeraient le pouce et l'index relevés de chaque main.

Selon un mode de réalisation particulier, la protéine peut comprendre au moins 1, et de préférence au moins 2, en particulier 2, 3 ou 4, motifs de main EF de la forme :
(D/N)-X₁-(D/N)-X₂-(D/N)-X₃-X₄-X₅-X₆-X₇-X₈-(E/D) [SEQ ID NO: 1]
où chacun des groupes X₁ à X₈ est indépendamment choisi (c'est-à-dire pas nécessairement le même résidu dans chaque position) parmi les acides aminés, notamment les acides aminés naturels.

En particulier, au moins deux motifs de séquence SEQ ID NO: 1 adjacents sont séparées par 10 à 15 résidus, par exemple 12 à 13 résidus d'acide aminé.

Dans un mode de réalisation, X₁ est P (Proline).

Dans certains aspects, X₆ et/ou X₈ peuvent être D ou E.

Dans certains aspects, la glycine (G) est préférée, mais pas obligatoire, à X₃.

Dans un mode de réalisation, la partie protéique comprend 2, 3 ou 4 motifs de main EF de séquence SEQ ID NO:1, et les deux motifs d'une paire adjacente de motif de main EF sont séparés par 10-15, par exemple 12-13, acides aminés. D'autres permutations sont envisageables. Divers exemples de séquences d'acides aminés pour les motifs EF sont présentés ci-dessous :
SEQ ID NO: 2 : DPDKDGTIDLKE
SEQ ID NO: 3 : DPDKDGTLDAKE
SEQ ID NO: 4 : DPDNDGTLDKKE
SEQ ID NO: 5 : DPDKDGTIDAKE
SEQ ID NO: 6 : DPDNDGTIDKKE
SEQ ID NO: 7 : NPDKDGTIDARE
SEQ ID NO: 8 : NKDNDDSLEIAE
SEQ ID NO: 9 : DIDKDGRVSVEE
SEQ ID NO: 10 : DKDNDGTLDREE
SEQ ID NO: 11 : DKNGDGFIDKEE

Dans un mode de réalisation, la partie protéique comprend 2, 3 ou 4 motifs de main EF de séquence choisie parmi les séquences SEQ ID NO:2 - SEQ ID NO:11, et, en particulier, les deux motifs d'une paire adjacente de motif de main EF sont séparés par 10-15, par exemple 12-13, acides aminés.

Dans un mode de réalisation, la partie protéique comprend 2, 3 ou 4 motifs de main EF de séquence choisie parmi les séquences SEQ ID NO:2 - SEQ ID NO:4, et, en particulier, les deux motifs d'une paire adjacente de motif de main EF sont séparés par 10-15, par exemple 12-13, acides aminés.

Dans un mode de réalisation, la partie protéique comprend les motifs de main EF de séquence SEQ ID NO:2, SEQ ID NO:3 et SEQ ID NO:4, et, en particulier, les deux motifs d'une paire adjacente de motif de main EF sont séparés par 10-15, par exemple 12-13, acides aminés.

Selon un mode de réalisation particulier, la partie protéique dérive totalement de la lanmoduline.

Selon un mode de réalisation particulier, la partie protéique dérive partiellement de la lanmoduline, ladite partie protéique étant capable de lier un actinide ou un lanthanide.

Selon un mode de réalisation particulier, la partie protéique comprend ou est constituée d'une séquence SEQ ID NO: 12 (DIAAFDPDKDGTIDLKEALAAGSAAFDKLDPDKDGTLDAKELKGRVSEADLKKLDPDN DGTLDKKEYLAAVEAQFKAANPDNDGTIDARELASPAGSALVNLIR), ou un séquence ayant au moins 80, 85 90 ou 95% d'identité avec la séquence SEQ ID NO: 12.

Au sens de la présente invention, le « pourcentage d'identité » ou « % d'identité » entre deux séquences d'acides aminés désigne le pourcentage de résidus d'acides aminés identiques entre les deux séquences à comparer, obtenu après un alignement optimal, ce pourcentage étant purement statistique et les différences entre les deux séquences étant réparties aléatoirement sur leur longueur. La comparaison de deux séquences d'acides aminés est traditionnellement effectuée en comparant les séquences après les avoir alignées de façon optimale, cette comparaison pouvant être effectuée par segment ou en utilisant une « fenêtre d'alignement ». L'alignement optimal des séquences à comparer peut être effectué, outre la comparaison manuelle, au moyen de l'algorithme d'homologie locale de Smith et Waterman, de la méthode de recherche de similarité de Pearson et Lipman (1988) ou d'un logiciel informatique utilisant ces algorithmes (GAP, BESTFIT, FASTA et TFASTA dans le Wisconsin Genetics Software Package, Genetics Computer Group, 575 Science Dr., Madison, WI, ou par le logiciel de comparaison BLAST NR ou BLAST P). Le pourcentage d'identité entre deux séquences d'acides aminés est déterminé en comparant les deux séquences alignées de manière optimale, la séquence d'acides aminés à comparer pouvant comporter des ajouts ou des suppressions par rapport à la séquence de référence pour un alignement optimal entre les deux séquences. Le pourcentage d'identité est calculé en déterminant le nombre de positions où l'acide aminé ou le résidu est identique entre les deux séquences, de préférence entre les deux séquences complètes, en divisant le nombre de positions identiques par le nombre total de positions dans la fenêtre d'alignement et en multipliant le résultat par 100 pour obtenir le pourcentage d'identité entre les deux séquences.

Selon un mode de réalisation particulier, la partie protéique comprend ou est constituée d'une séquence SEQ ID NO: 13 (LAAGSAAFDKLDPDKDGTLDAKELKGRVSEADLKKLDPDNDGTLDKKEYLAAVEAQF KAANPDNDGTIDARELASPAGSALVNLIR), ou un séquence ayant au moins 80, 85 90 ou 95% d'identité avec la séquence SEQ ID NO: 13.

Selon un mode de réalisation particulier, la partie protéique comprend ou est constituée d'une séquence SEQ ID NO: 14 (APTTTTKVDIAAFDPDKDGTIDLKEALAAGSAAFDKLDPDKDGTLDAKELKGRVSEAD LKKLDPDNDGTLDKKEYLAAVEAQFKAANPDNDGTIDARELASPAGSALVNLIR), ou un séquence ayant au moins 80, 85 90 ou 95% d'identité avec la séquence SEQ ID NO: 14.

Selon un mode de réalisation particulier, la partie protéique comprend au moins deux, en particulier deux, séquences SEQ ID NO: 12 ou 13 ou 14, ou deux séquences ayant au moins 80, 85, 90 ou 95% d'identité avec la séquence SEQ ID NO: 12, ou 13 ou 14, en particulier séparés par 20-30, par exemple 24-26, acides aminés.
Selon un mode de réalisation particulier, la partie protéique comprend ou est constituée d'une séquence SEQ ID NO: 15
(APTTTTKVDIAAFDPDKDGTIDLKEALAAGSAAFDKLDPDKDGTLDAKELKGRVSEAD LKKLDPDNDGTLDKKEYLAAVEAQFKAANPDNDGTIDARELASPAGSALVNLIRGSGAE AAAKEAAAKEAAAKEAAAKAAPTTTTKVDIAAFDPDKDGTIDLKEALAAGSAAFDKLD PDKDGTLDAKELKGRVSEADLKKLDPDNDGTLDKKEYLAAVEAQFKAANPDNDGTIDA RELASPAGSALVNLIR), ou un séquence ayant au moins 80, 85 90 ou 95% d'identité avec la séquence SEQ ID NO: 12.

Selon un mode de réalisation particulier, S₁ est une séquence comprenant ou étant constituée d'une séquence SEQ ID NO: 16(MGNEASYPL), ou un séquence ayant un ou deux acides aminés supprimés, remplacés ou ajoutés par rapport à la séquence SEQ ID NO: 16.

Selon un mode de réalisation particulier, S₂ est un espaceur peptidique comprenant ou étant constituée d'une séquence de 5 à 7 acides aminés, en particulier 5 à 7 acides aminés naturels.

Selon un mode de réalisation particulier, S₂ est un espaceur peptidique comprenant ou étant constituée d'une séquence SEQ ID NO: 17 (SRLIGSA), ou d'une séquence ayant un ou deux acides aminés supprimés, remplacés ou ajoutés par rapport à la séquence SEQ ID NO: 17.

Les peptides selon l'invention sont notamment préparés par les techniques classiques de synthèse en phase solide ou liquide, connues en elles-mêmes de l'Homme du métier.

Les protéines selon l'invention sont notamment préparées par les techniques d'ADN recombinant, connues en elles-mêmes de l'Homme du métier.

Selon un autre aspect, l'invention concerne également l'utilisation d'un support tel que défini précédemment pour l'extraction et/ou la récupération d'actinides et/ou de lanthanides.

Tous les modes de réalisation décrits précédemment relativement au support s'appliquent également ici, seuls ou en combinaison.

Selon un autre aspect, l'invention concerne également un procédé de préparation d'un substrat tel que défini précédemment, comprenant les étapes suivantes :
a) Une étape de préparation d'une partie protéique modifiée de formule (II) suivante: S₁-S₂-P, en particulier par modification chimio-enzymatique de P; puis
b) Une étape de préparation d'un composé de formule (III) suivante: Y'-L₃-Z-S₁-S₂-P par mise en contact de la partie protéique modifiée de formule (II) telle qu'obtenue à l'issue de l'étape précédente avec un composé de formule (IV) suivante : Y'-L₃-COOH, en présence de N-myristoyle transférase (NMT), Z étant en particulier en position N-terminale de S₁ ; Et
c) Une étape de préparation d'un support inorganique portant à sa surface des groupes - OH fonctionnalisés par des résidus de formule (V) suivante :

   -(W)ₘ-L₁-(X)ₙ-(L₂)ₚ-Y'' (V),

   par mise en contact d'un support inorganique portant à sa surface des groupes -OH, avec
      - un composé de formule (VI) suivante :

         X'-(W)ₘ-L₁-(X)ₙ-(L₂)ₚ-Y'' (VI),

         où X' représente OR' avec R' étant un (C₁-C₆)-alkyle linéaire, lorsque m=1, et représente un groupe partant, en particulier un halogène, plus particulièrement Br, lorsque m=0,
         ou
      - lorsque n=1, avec un composé de formule (VII) suivante :

         X'-(W)ₘ-L₁-XH (VII),
   puis avec un composé de formule (VIII) suivante :

      X''-(L₂)ₚ-Y'' (VIII),
   où X' représente un groupe partant, en particulier un halogène, plus particulièrement Br, puis
d) Une étape de mis en contact de type chimie click, entre un support inorganique portant à sa surface des groupes -OH fonctionnalisés par des résidus de formule (V) avec un composé de formule (III), par exemple en présence d'ascorbate de sodium et de sulfate de cuivre ;
dans lesquelles
Y' et Y'' représentent respectivement N₃, et un résidu susceptible de former Y au contact de N₃ ; ou un résidu susceptible de former Y au contact de N₃, et N₃.

Selon un mode de réalisation particulier, Y' et Y'' représentent respectivement N₃, et un résidu susceptible de former Y au contact de N₃.

Selon un autre mode de réalisation particulier, Y' et Y'' représentent respectivement un résidu susceptible de former Y au contact de N₃, et N₃.

Selon un mode de réalisation particulier, le procédé selon l'invention comprend les étapes suivantes :
a) Une étape de préparation d'une partie protéique modifiée de formule (II) suivante: S₁-S₂-P, en particulier par modification chimio-enzymatique de P; puis
b) Une étape de préparation d'un composé de formule (III) suivante: N₃-L₃-Z-S₁-S₂-P par mise en contact de la partie protéique modifiée de formule (II) telle qu'obtenue à l'issue de l'étape précédente avec un composé de formule (IV) suivante : N₃-L₃-COOH, en présence de N-myristoyle transférase (NMT), Z étant en particulier en position N-terminale de S₁ ; Et
c) Une étape de préparation d'un support inorganique portant à sa surface des groupes-OH fonctionnalisés par des résidus de formule (V) suivante :

   -(W)ₘ-L₁-(X)ₙ-(L₂)ₚ-CH≡CH (V),

   par mise en contact d'un support inorganique portant à sa surface des groupes -OH, avec
      - un composé de formule (VI) suivante :

         X'-(W)ₘ-L₁-(X)ₙ-(L₂)ₚ-CH≡CH (VI),

         où X' représente OR' avec R' étant un (C₁-C₆)-alkyle linéaire, lorsque m=1, et représente un groupe partant, en particulier un halogène, plus particulièrement Br, lorsque m=0,
         ou
      - lorsque n=1, avec un composé de formule (VII) suivante :

         X'-(W)ₘ-L₁-XH (VII),
   puis avec un composé de formule (VIII) suivante :

      X''-(L₂)ₚ-CH≡CH (VIII),
   où X' représente un groupe partant, en particulier un halogène, plus particulièrement Br, puis
d) Une étape de mis en contact de type chimie click, entre un support inorganique portant à sa surface des groupes -OH fonctionnalisés par des résidus de formule (V) avec un composé de formule (III), par exemple en présence d'ascorbate de sodium et de sulfate de cuivre.

Selon un mode de réalisation particulier, le procédé selon l'invention comprend les étapes suivantes :
a) Une étape de préparation d'une partie protéique modifiée de formule (II) suivante: S₁-S₂-P, en particulier par modification chimio-enzymatique de P; puis
b) Une étape de préparation d'un composé de formule (III) suivante: HC≡C(H)-L₃-Z-S₁-S₂-P par mise en contact de la partie protéique modifiée de formule (II) telle qu'obtenue à l'issue de l'étape précédente avec un composé de formule (IV) suivante : HC≡C(H)-L₃-COOH, en présence de N-myristoyle transférase (NMT), Z étant en particulier en position N-terminale de S₁ ;
   Et
c) Une étape de préparation d'un support inorganique portant à sa surface des groupes - OH fonctionnalisés par des résidus de formule (V) suivante :

   -(W)ₘ-L₁-(X)ₙ-(L₂)ₚ-N₃ (V),

   par mise en contact d'un support inorganique portant à sa surface des groupes -OH, avec
      - un composé de formule (VI) suivante :

         X'-(W)ₘ-L₁-(X)ₙ-(L₂)ₚ-N₃ (VI),

         où X' représente OR' avec R' étant un (C₁-C₆)-alkyle linéaire, lorsque m=1, et représente un groupe partant, en particulier un halogène, plus particulièrement Br, lorsque m=0,
         ou
      - lorsque n=1, avec un composé de formule (VII) suivante :

         X'-(W)ₘ-L₁-XH (VII),
   puis avec un composé de formule (VIII) suivante :

      X"-(L₂)ₚ-N₃ (VIII),
   où X' représente un groupe partant, en particulier un halogène, plus particulièrement Br, puis
d) Une étape de mis en contact de type chimie click, entre un support inorganique portant à sa surface des groupes -OH fonctionnalisés par des résidus de formule (V) avec un composé de formule (III), par exemple en présence d'ascorbate de sodium et de sulfate de cuivre.

La mise en contact de type chimie click est bien connue de l'homme du métier. Il s'agit en particulier d'une cycloaddition de Huisgen 1,3 dipolaire catalysée par des sels de cuivre(I), telle que par exemple décrite par les groupes de Valery V. Fokine, K. Barry Sharpless et Morten Meldal.

Selon un mode de réalisation particulier, l'étape b) se fait en présence d'au moins un élément choisi parmi les actinides et/ou les lanthanides, en particulier en présence de Nd.

Selon un mode de réalisation particulier, le support inorganique portant à sa surface des groupes -OH est obtenu à partir d'un support inorganique à l'aide d'un traitement par un plasma d'O₂, par mise en contact avec HNO₃, par exemple à reflux, ou selon un procédé dit Piranha, une préparation de type Caro, ou par ozonation par voie humide (préparation de type « wet ozone »). Ces traitements sont bien connus de l'homme du métier, et par exemple décrits par Rébiscoul et al. (The Journal of Supercritical Fluids, Volume 51, Issue 2, 2009, Pages 287-294).

Selon un autre aspect, l'invention concerne également un procédé d'extraction et/ou de récupération d'au moins un élément choisi parmi les actinides et/ou les lanthanides, comprenant :
(i) une étape de mise en contact d'un support tel que défini précédemment avec une composition aqueuse, en particulier une solution aqueuse, comprenant au moins un élément choisi parmi les actinides et/ou les lanthanides, et ayant un pH supérieur ou égal à 3, en particulier supérieur à 3.

L'homme du métier pourra déterminer sans difficultés, à l'aide de ses connaissances générales, la température et/ou la pression auxquelles l'étape (i) peut être réalisée.

Selon un mode de réalisation particulier, l'étape (i) est réalisée à température ambiante et/ou à pression atmosphérique.

Par « température ambiante », on entend notamment une température comprise d'environ 15 à environ 25°C.

Par « pression atmosphérique », on entend notamment une pression comprise d'environ 870 et environ 1090 hPa.

Selon un mode de réalisation particulier, le procédé selon l'invention comprend les étapes suivantes :
(i) une étape de mise en contact d'un support tel que défini précédemment avec une composition aqueuse, en particulier une solution aqueuse, comprenant au moins un élément choisi parmi les actinides et/ou les lanthanides ;
(ii) une étape de mise en contact du support tel qu'obtenu à l'issue de l'étape précédente avec une solution aqueuse ayant un pH inférieur ou égal à 2,5, en particulier inférieur à 2,5, plus particulièrement d'environ 2.

Selon un mode de réalisation particulier, l'étape (ii) est réalisée à température ambiante et/ou à pression atmosphérique.

Selon un mode de réalisation particulier, le procédé selon l'invention est tel que les étapes (i) et (ii) sont répétées, l'étape (i) étant répétée sur la même composition aqueuse ou sur une autre composition aqueuse, en particulier une solution aqueuse, comprenant au moins un élément choisi parmi les actinides et/ou les lanthanides.

### DEFINITIONS

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

Tel qu'on l'entend ici, les plages de valeur sous forme de « x-y » ou « de x à y » ou « entre x et y » incluent les bornes x et y ainsi que les entiers compris entre ces bornes. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'il est utilisé ici, le terme "alkyle" désigne un groupe alkyle à chaîne linéaire ou ramifiée ayant le nombre d'atomes de carbone indiqué avant ledit terme, notamment 1 à 8 atomes de carbone, tel que méthyle, éthyle, propyle, isopropyle, butyle, isobutyle, sec-butyle, tert-butyle, pentyle, isoamyle, néopentyle, 1-éthylpropyle, 3-méthylpentyle, 2,2-diméthylbutyle, 2,3-diméthylbutyle, hexyle, octyle, etc. Ainsi, une expression telle que "alkyle en C₁-C₄" désigne un radical alkyle contenant de 1 à 4 atomes de carbone. Il en est de même pour le terme « alcane ».

**[Table 1]**

| | |
|---|---|
| SEQ ID NO: 1 | (D/N)-X₁-(D/N)-X₂-(D/N)-X₃-X₄-X₅-X₆-X₇-X₈-(E/D) |
| SEQ ID NO: 2 | DPDKDGTIDLKE |
| SEQ ID NO: 3 | DPDKDGTLDAKE |
| SEQ ID NO: 4 | DPDNDGTLDKKE |
| SEQ ID NO: 5 | DPDKDGTIDAKE |
| SEQ ID NO: 6 | DPDNDGTIDKKE |
| SEQ ID NO: 7 | NPDKDGTIDARE |
| SEQ ID NO: 8 | NKDNDDSLEIAE |
| SEQ ID NO: 9 | DIDKDGRVSVEE |
| SEQ ID NO: 10 | DKDNDGTLDREE |
| SEQ ID NO: 11 | DKNGDGFIDKEE |
| SEQ ID NO: 12 | |
| SEQ ID NO: 13 | |
| SEQ ID NO: 14 | |
| SEQ ID NO: 15 | |
| SEQ ID NO: 16 | MGNEASYPL |
| SEQ ID NO: 17 | SRLIGSA |

### FIGURES

La [Fig.1] présente **A** : Courbes de réflectivité expérimentales et ajustées du substrat de silicium après activation Piranha (référence), après fonctionnalisation avec le MPTES (SH), après alcynation (SH Al) et après chimie click (SH Al LanM) réalisée avec la LanM modifiée exprimée avec le Nd (a) et sans Nd (b) ; ainsi que **B** : respectivement les profils de densité électroniques associés issus de l'ajustement des courbes de réflectivité (c) et (d). Les profils soustraits du substrat de silicium sont aussi présentés sur les figures (c) et (d).
La [Fig.2] présente des images AFM du substrat fonctionnalisé avec la LanM exprimée avec Nd et mesure de la distance verticale sur les lignes telles qu'indiqué.
La [Fig.3] montre des images AFM du substrat fonctionnalisé avec la LanM exprimée sans Nd et transformée de Fourier avec enlèvement des basses fréquences afin d'obtenir une image plane permettant le calcul de la taille caractéristiques des filaments observés.
La [Fig.4] illustre un substrat de silicium fonctionnalisé avec la LanM exprimée sans Nd analysé par AFM à sec, *in situ* après une heure sous H₂O, *in situ* sous 3 solutions de Nd à 0.33 µM, 2µM et 4 µM. Les analyses *in situ* ont été réalisées avec une force appliquée à la pointe de 0.7 nN pour mettre en évidence la mobilité des filaments de la protéine et 4 nN afin de déterminer la morphologie de la surface.
La [Fig.5] a pour objet des **i**mages AFM des surfaces des substrats fonctionnalisés avec la LanM exprimée avec le Nd avant et après 5 min dans une solution à pH 2.

### EXEMPLES

### Exemple 1 : Préparation des supports de l'invention

### Expression de la protéine LanM modifiée

La modification chimioenzymatique de la lanmoduline (LanM) a été réalisée pour permettre la chimie click. Pour cela, ont été exprimées dans la même souche d'expression bactérienne *E. coli* C41pROS la N-myristoyl transférase (NMT) et la lanmoduline, modifiée en position N-terminale pour ajouter la séquence de reconnaissance de l'enzyme NMT (RS1) et une séquence espaceur (L1). L'ADN codant pour l'enzyme NMT a été apportée par le plasmide pHV738, Addgene (Kulkarni et al., Bioconjugate chemistry, (2015), 26(10), 2153-2160). Le plasmide pHV738 porte une résistance à la kanamycine. Le gène codant pour la LanM sous forme RS1-L1-LanM a été cloné soit dans un vecteur d'expression pet16b, soit dans le vecteur d'expression pNIC-bsa4 préalablement modifié pour porter une résistance à l'ampicilline. L'induction de la production des protéines se fait à 1mM d'IPTG à une DO600 = 0.5 avec un ajout de 500 µM de 12-azidododecanoic acid (ADA), en absence ou en présence de Nd (100 µM). La culture est poursuivie pendant 4 heures à 37°C à 150 rpm. Une fois la culture terminée, elle est centrifugée à 4500 rpm/min et le culot bactérien contenant toutes les protéines est récupéré. Le lysat est préparé en ajoutant au culot 40 ml de tampon Tris 50 mM à pH 8, 200 µl de lysozyme et 40 µl d'AEBSF (fluorure de 4-(2-aminoéthyl)benzènesulfonyle, antiprotéase). Le mélange est ensuite congelé à - 80°C pendant une nuit, placé à -20°C puis sonifié et finalement centrifugé à 14000 rpm/min pendant 30 minutes. La production de la protéine est vérifiée sur gel d'électrophorèse. Une bande est observée uniquement lorsque l'expression est réalisée à l'aide du vecteur pNIC-bsa4 et en présence de Nd 100 µM.

Pour vérifier la fonctionnalité de l'enzyme NMT qui permet de rajouter l'ADA en N-terminal de RS1-L1-LanM, la réaction de chimie click a été réalisée avec un composé fluorescent alkylé, le Tetramethylrhodamine alkyne (TAMRA). Ces expériences montrent que les constructions effectuées permettent de réaliser une réaction de chimie click à partir des lysats des cultures bactériennes et que cette réaction est spécifique, avec une seule bande identifiée (en plus de la fluorescence du front de migration) en présence de RS1-L1-LanM dont les séquences sont les suivantes :
Séquence RS1 : MGNEASYPL (SEQ ID NO: 16)
Séquence L1 : SRLIGSA (SEQ ID NO: 17)
Séquence LanM :

### Fonctionnalisation du support

Le support est tout d'abord activé pour permettre la formation d'une quantité suffisante de groupements hydroxyle sur la surface. Cette étape peut être réalisée en soumettant le support à un plasma O₂ ou tout procédé chimique comme le procédé Piranha, un reflux HNO₃...

Une fois activé, il est possible soit d'alcyner directement la surface, soit de la préfonctionnaliser avec un alkoxysilane présentant un groupement donneur d'électron (SH, NH₂...) puis d'alcyner ce groupement. Dans le premier cas correspondant à l'alcynation directe, il suffit par exemple de mettre le support solide inorganique durant 24h dans une solution contenant 1 %m de bromo-alc-1-yne dans du toluène en présence de quelques microlitres de triéthylamine. Dans ce cas-là, la liaison entre le support solide inorganique et le greffon est une liaison Si-O-C. Dans le deuxième cas, la préfonctionnalisation peut par exemple être réalisée par condensation d'un alkoxysilane dans une solution 1%m de mercaptoalkoxysilane dans le toluène durant une durée qu'il sera nécessaire d'ajuster suivant l'accessibilité des surfaces du support solide inorganique, en règle générale inférieure à 24h. Par la suite, le support préfonctionnalisé peut être alcyné de la même manière que précédemment. Ici, la liaison entre le greffon et le support est une liaison Si-O-Si.

Après alcynation du support solide inorganique, la LanM modifiée avec un groupement azoture avec ou sans Nd, peut alors être greffée par chimie click. Pour cela, le support solide inorganique alcyné est immergé dans un lysat contenant les réactifs nécessaires à la chimie click, à savoir l'ascorbate de sodium et le sulfate de cuivre. Par exemple, pour 3 substrats de silicium alcynés de 1 cm² chacun, 20 mL de lysat auquel 500 µL d'ascorbate de sodium à 1.4.10⁻⁴ M et 100 µL de sulfate de cuivre à 2.10⁻⁵ M ont été ajoutés, suffisent pour recouvrir complétement la surface de protéine après 1h dans le noir sous agitation. Afin d'enlever les différentes protéines non greffées de manière covalente, les échantillons doivent être ensuite rincés 3 fois avec une solution d'acétate d'ammonium à 20 mM.

### Exemple 2 : Caractérisation des supports de l'invention au cours des différentes étapes de fonctionnalisation

Les supports solides inorganiques cités en exemple ici sont des substrats de silicium. Ces substrats ont été activités avec une solution Pirrhana, greffés avec du mercaptopropyltrimethoxysilane (MPTES) puis alcynés avec du 4-bromo-but-1-yne. La LanM exprimée avec du Nd et celle sans Nd ont ensuite été greffées sur les substrats alcynés.

### Détermination de la densité surfacique de LanM

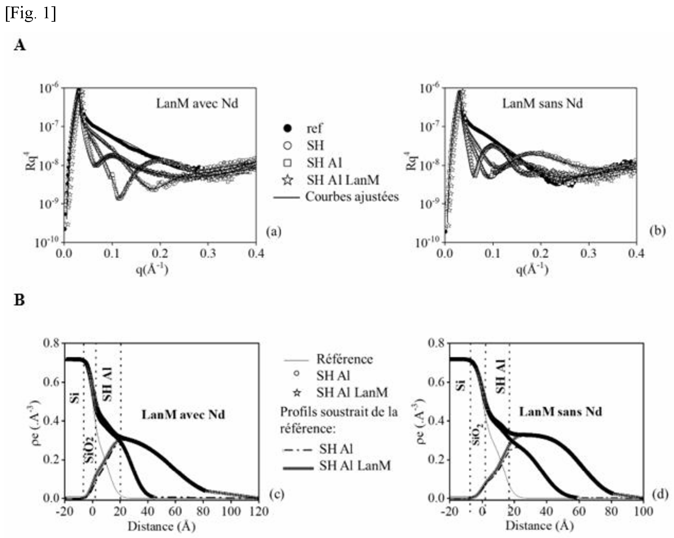

La réflectométrie des rayons X (RRX) a été utilisée afin de déterminer le profil de densité électronique perpendiculairement à la surface après chaque étape de la fonctionnalisation. Ces profils sont obtenus à partir de l'ajustement des courbes de réflectivité à l'aide du logiciel REFLEX 53 (J. Appl. Cryst. (2019). 52, 201-213). Ces données sont présentées sur la **figure 1**.

A partir des profils de densité électronique, il est possible de calculer la densité surfacique d'alcyne et de LanM sur la surface du substrat de silicium en soustrayant le profil de la référence au profil du substrat greffé. La densité d'électrons obtenue correspond alors aux greffons ajoutés sur la surface. En divisant l'aire sous la courbe de ce profil par le nombre d'électrons contenus dans le greffons il est alors possible de calculer sa densité surfacique.

Dans le cas du substrat alcyné, la densité de groupement alcyne en surface est comprise entre 5 et 8 alcynes.nm⁻² sur les 20 échantillons analysés. Pour la LanM modifiée de formule chimique C₁₆₄H₉₇₄N₁₇₅O₂₀₇S qui contient 7731 électrons lorsqu'elle est exprimée avec Nd et 7560 électrons sans Nd, 1 LanM. tous les 5 à 8 nm² avec ou sans Nd est obtenue. L'épaisseur de la couche déposée après fonctionnalisation avec la proteine exprimée avec du Nd de l'ordre de 3.5 nm et la valeur de densité surfacique de LanM cohérentes avec la taille de la LanM en présence de lanthanide de l'ordre de 3.5 nm (donnée obtenue par simulation de la diffusion aux petits angles des rayons X à partir de la structure la LanM en présence de lanthanide et ajustement avec un modèle de sphère, selon Cook et al., Biochemistry 2019, 58, 2, 120-125).

### Analyse de la morphologie de la surface après fonctionnalisation

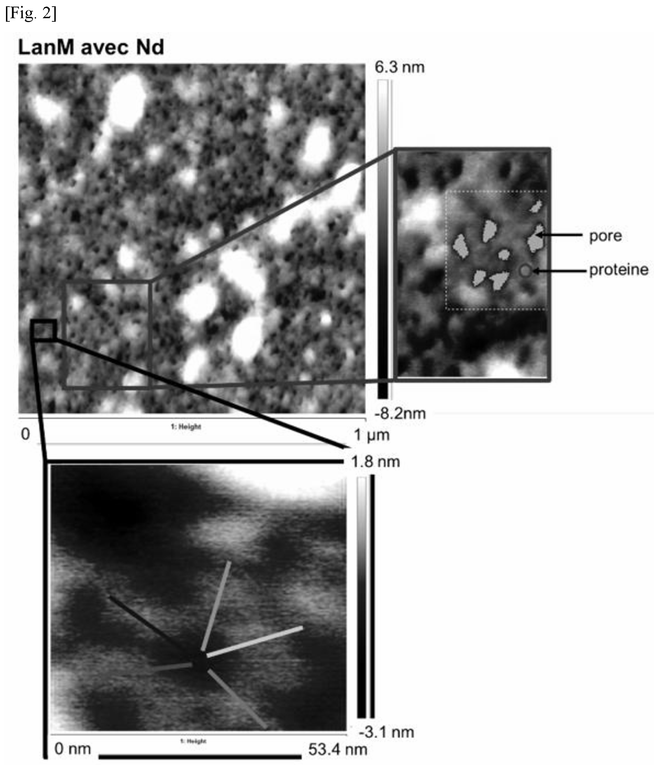

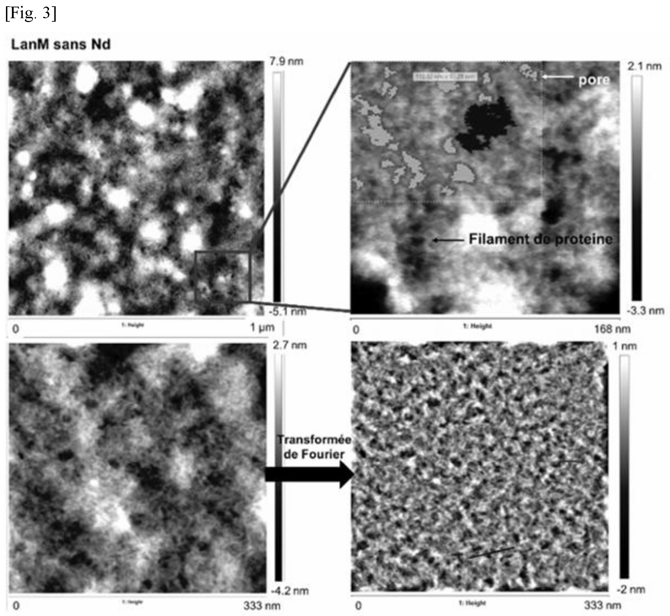

La microscopie à force atomique (AFM) a été utilisée afin de déterminer la morphologie de la surface après fonctionnalisation. Les résultats obtenus sur les substrats après fonctionnalisation avec la LanM exprimée avec Nd sont présentés sur la **figure 2**. Ces résultats mettent en évidence une surface tapissée d'une couche présentant des pores de 14±3 nm de diamètre et de profondeur de 1.1±0.3 nm. Entre les pores, des objets difficiles à imager plus ou moins sphériques dont la taille serait comprise entre 5 et 6 nm. La taille mesurée et la forme sphérique de ces objets correspondent à la LanM repliée. Par endroit, plusieurs LanM s'assemblent sous forme de structures hexagonales. Les analyses par AFM du substrat fonctionnalisé avec la LanM exprimée sans Nd, présente une morphologie de surface différente comme cela est illustré sur la **figure 3**. La surface présente des filaments distribués de manière aléatoire de profondeur 1 +/- 0.2 nm et de largeur 6.6 +/-0.7 nm et des pores de tailles irrégulières 8.5+/-3.5 nm et de profondeur 0.7+/-0.4 nm. Ainsi, exprimée sans Nd, la LanM est greffé sous forme dépliée, conformation qui lui est propre lorsqu'elle ne complexe pas un métal.

Ainsi, les résultats issus des mesures de réflectivité et ceux obtenus par AFM ont permis de mettre en évidence la fonctionnalisation efficace du substrat alcyné avec la LanM avec et sans Nd. La morphologie de la surface après fonctionnalisation permet de justifier que la protéine greffée est bien la LanM, protéine présentant une conformation repliée lorsqu'elle complexe les éléments du block f et dépliée lorsqu'elle ne complexe rien. Ceci est justifié par la présence d'objets sphériques lorsque c'est la LanM exprimée avec Nd qui est greffée et par l'obtention d'objet à structure filamentaire lorsque la LanM est exprimée sans Nd.

### Exemple 3 : Mise en évidence de la complexation réversible d'éléments du groupe f par les supports de l'invention

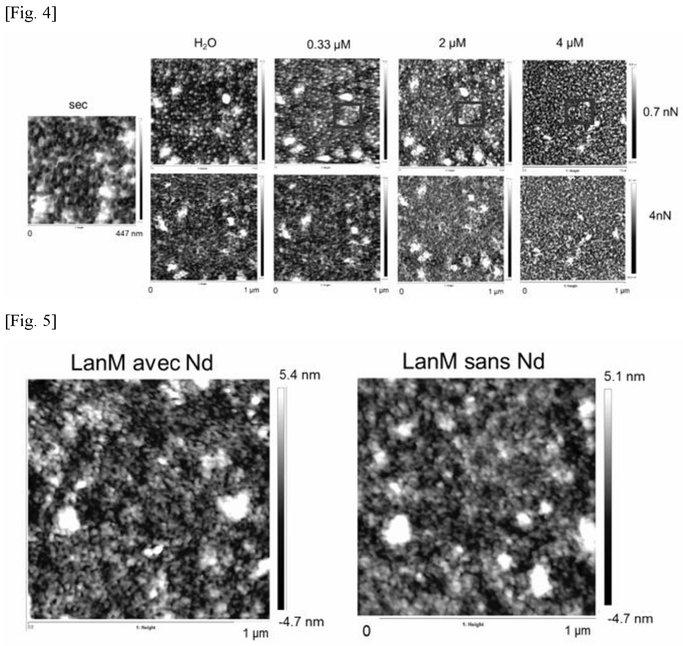

Afin de déterminer si la LanM greffée sur le substrat est toujours efficace pour complexer les éléments du groupe f, le changement de morphologie de la LanM sans Nd a été analysé par AFM *in situ* lors de sa mise en contact avec des solutions de Nd à différentes concentrations. Les images AFM présentées sur **la** **figure 4** ont été réalisées avec une force appliquée à la pointe de 0.7 nN afin de mettre en évidence la mobilité des filaments de la LanM et à 4 nN pour observer la morphologie de la surface.

Les résultats présentés ici mettent évidence plusieurs points importants :
- Après 1h d'hydratation, sous eau et avec une force appliquée sur la pointe de 0.7 nN, les filaments sont orientés dans le sens du balayage. Avec cette force, la structure filamentaire n'est pas clairement visible. En appuyant suffisamment sur la surface (4 nN) pour écarter les filaments disperses, les protéines dépliées sont observables.
- Après injection des solutions de Nd, il apparait qu'à 0.7 nN, les filaments sont de moins en moins mobiles avec l'augmentation de la concentration en Nd. Les images sont de moins en moins perturbées et par endroit il est possible de retrouver des couronnes avec un puit central similaires à celles observées sur le substrat fonctionnalisé avec la LanM exprimée avec le Nd (encadré rouge). Lorsque la force appliquée sur la pointe est de 4 nN, les images montrent que les protéines sont réactives au Nd mais présentent une flexibilité qui diminue avec la concentration en Nd de la solution utilisée. Leur état initial non repliées, et les interactions qu'elles ont créées entre elles lors du séchage fait que leur conformation finale n'est pas identique à celle obtenue avec la LanM exprimée avec le Nd.

Ces résultats mettent donc en évidence que les protéines exprimées sans Nd greffées sont réactives au Nd indiquant une complexation. Cependant, elles ne présentent pas la même répartition surfacique que celle observé avec la LanM exprimée avec du Nd greffée.

De la même manière, afin de déterminer si le processus de complexation est réversible, la surface du substrat fonctionnalisé avec la LanM exprimée avec Nd et celui avec la LanM exprimée sans Nd après immersion dans les différentes solutions contenant du Nd, ont été immergés à pH 2 durant 5 min, pH auquel la protéine relargue le Nd. La **figure 5** présente les images AFM après mise en solution à pH 2.

Avec ou sans Nd, les images AFM des substrats fonctionnalisés avec la LanM mettent en évidence des arrangements inter-protéines à la surface profondément modifiés. Un changement de morphologie des protéines sur la surface est clairement visible. Les protéines unitaires apparaissent plus grandes mettant en évidence un probable dépliement de la LanM. Même si certaines associations en couronne persistent, elles ne sont plus aussi fréquentes.

Ces résultats sont une preuve que la LanM greffée est toujours capable de complexer et relarguer le Nd.

## Revendications

1. Support inorganique portant à sa surface des groupes -OH fonctionnalisés par des résidus de formule (I) suivante :
-(W)ₘ-L₁-(X)ₙ-(L₂)ₚ-Y-L₃-Z-S₁-S₂-P (I),
dans laquelle:
m est égal à 0 ou 1 ;
n est égal à 0 ou 1 ;
p est égal à 0 ou 1 ;
W représente Si comme suit : 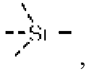
- - - représentant indépendamment une liaison avec un atome d'oxygène d'un groupe -OH porté par ledit support inorganique ou avec un résidu -OH, l'une au moins des liaisons --- représentant une liaison avec un atome d'oxygène d'un groupe -OH porté par ledit support inorganique ; et - représentant la liaison avec L₁ ;
L₁ est un groupe (C₁-C₂₄)-alcane diyle linéaire ou branché, optionnellement interrompu par au moins un atome ou groupe choisi parmi -O-, -NR-, -S-, -C(=O)-, -O-C(=O)-, -C(=O)-O-, -NR-C(=O)-, -C(=O)-NR-, -NR-C(=O)-NR'-, -NR-C(=S)-NR'-, -NR-C(=O)-O-, -O-C(=O)-NR'-; - C(R)=C(R')-, -C=C-, et les arène diyles, R et R' étant indépendamment H ou un groupe (C₁-C₆)-alkyle linéaire ou branché ;
X est choisi parmi -S-, -NR"-, R" étant H ou un groupe (C₁-C₆)-alkyle linéaire ou branché, -O-, - C(=O)-, -O-C(=O)-, -C(=O)-O-, -NR-C(=O)-, -C(=O)-NR-, -NR-C(=O)-NR'-, -NR-C(=O)-O-, - O-C(=O)-NR'-; -C(R)=C(R')-, et -C=C-; -NR-C(=S)-NR'-, R et R' étant indépendamment H ou un groupe (C₁-C₆)-alkyle linéaire ou branché ;
Y est un groupe triazole diyle ou un groupe diyle comprenant un groupe triazole, par exemple un groupe triazole fusionné à un groupe cycloalkyle éventuellement substitué, notamment choisi parmi : 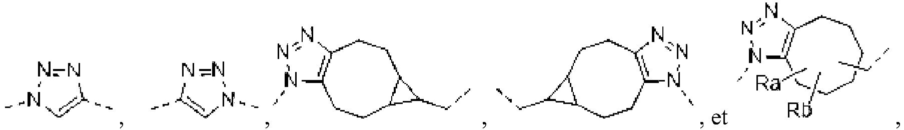 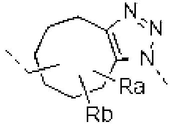 avec Ra et Rb étant indépendamment H ou F, en particulier 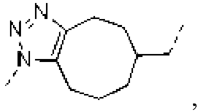 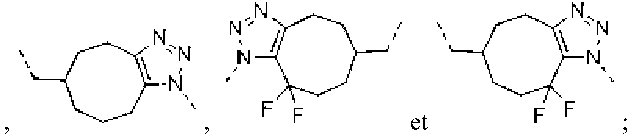
L₃ est un groupe (C₁-C₂₄)-alcane diyle linéaire ou branché ;
Z représente -C(=O)-O- ;
S₁ est une séquence peptidique de reconnaissance de la N-myristoyl transférase (NMT), Z étant en particulier en position N-terminale de S₁ ;
S₂ est un espaceur peptidique;
P est une partie protéique capable de lier un actinide ou un lanthanide.

2. Support selon la revendication 1, dans lequel lesdits résidus sont :
- de formule (I₁) suivante :
-W-L₁-X-Y-L₃-Z-S₁-S₂-P (I₁)
; ou
- de formule (I₂) suivante :
-L₁-Y-L₃-Z-S₁-S₂-P (I₂).

3. Support selon l'une quelconque des revendications précédentes, lequel est constitué de ou comprend un matériau choisi parmi SiO₂, TiO₂, ZrO₂ et alumine.

4. Support selon l'une quelconque des revendications précédentes, lequel est sous la forme d'un monolithe, en particulier un monolithe poreux, d'une membrane, d'une poudre, notamment une pluralité de microparticules, de granules, ou de sphères, ledit support étant par exemple susceptible d'être utilisé dans une colonne, notamment de chromatographie.

5. Support selon l'une quelconque des revendications précédentes, dans lequel la partie protéique :
- dérive totalement de la lanmoduline ;
- dérive partiellement de la lanmoduline, ladite partie protéique étant capable de lier un actinide ou un lanthanide ; ou
- comprend ou est constituée d'une séquence SEQ ID NO: 14 (APTTTTKVDIAAFDPDKDGTIDLKEALAAGSAAFDKLDPDKDGTLDAKELKGRV SEADLKKLDPDNDGTLDKKEYLAAVEAQFKAANPDNDGTIDARELASPAGSALV NLIR), ou un séquence ayant au moins 80, 85 90 ou 95% d'identité avec la séquence SEQ ID NO: 14.

6. Support selon l'une quelconque des revendications précédentes, dans lequel S₁ est une séquence comprenant ou étant constituée d'une séquence SEQ ID NO: 16(MGNEASYPL), ou un séquence ayant un ou deux acides aminés supprimés, remplacés ou ajoutés par rapport à la séquence SEQ ID NO: 16.

7. Support selon l'une quelconque des revendications précédentes, dans lequel S₂ est un espaceur peptidique comprenant ou étant constituée d'une séquence de 5 à 7 acides aminés, en particulier 5 à 7 acides aminés naturels.

8. Utilisation d'un support selon l'une quelconque des revendications précédentes pour l'extraction et/ou la récupération d'actinides et/ou de lanthanides.

9. Procédé de préparation d'un substrat selon l'une quelconque des revendications 1 à 7, comprenant les étapes suivantes :
a) Une étape de préparation d'une partie protéique modifiée de formule (II) suivante: S₁-S₂-P, en particulier par modification chimio-enzymatique de P; puis
b) Une étape de préparation d'un composé de formule (III) suivante: Y'-L₃-Z-S₁-S₂-P par mise en contact de la partie protéique modifiée de formule (II) telle qu'obtenue à l'issue de l'étape précédente avec un composé de formule (IV) suivante : Y'-L₃-COOH, en présence de N-myristoyle transférase (NMT), Z étant en particulier en position N-terminale de S₁ ; Et
c) Une étape de préparation d'un support inorganique portant à sa surface des groupes - OH fonctionnalisés par des résidus de formule (V) suivante :
-(W)ₘ-L₁-(X)ₙ-(L₂)ₚ-Y'' (V),
par mise en contact d'un support inorganique portant à sa surface des groupes -OH, avec
- un composé de formule (VI) suivante :
X'-(W)ₘ-L₁-(X)ₙ-(L₂)ₚ-Y'' (VI),
où X' représente OR' avec R' étant un (C₁-C₆)-alkyle linéaire, lorsque m=1, et représente un groupe partant, en particulier un halogène, plus particulièrement Br, lorsque m=0,
ou
- lorsque n=1, avec un composé de formule (VII) suivante :
X'-(W)ₘ-L₁-XH (VII),
puis avec un composé de formule (VIII) suivante :
X''-(L₂)ₚ-Y'' (VIII),
où X' représente un groupe partant, en particulier un halogène, plus particulièrement Br, puis
d) Une étape de mis en contact de type chimie click, entre un support inorganique portant à sa surface des groupes -OH fonctionnalisés par des résidus de formule (V) avec un composé de formule (III), par exemple en présence d'ascorbate de sodium et de sulfate de cuivre ;
dans lesquelles
Y' et Y'' représentent respectivement N₃, et un résidu susceptible de former Y au contact de N₃ ; ou un résidu susceptible de former Y au contact de N₃, et N₃.

10. Procédé selon la revendication 9, dans lequel l'étape b) se fait en présence d'au moins un élément choisi parmi les actinides et/ou les lanthanides, en particulier en présence de Nd.

11. Procédé selon la revendication 9 ou 10, dans lequel le support inorganique portant à sa surface des groupes -OH est obtenu à partir d'un support inorganique à l'aide d'un traitement par un plasma d'O₂, par mise en contact avec HNO₃, par exemple à reflux, ou selon un procédé dit Piranha.

12. Procédé d'extraction et/ou de récupération d'au moins un élément choisi parmi les actinides et/ou les lanthanides, comprenant :
(i) une étape de mise en contact d'un support selon l'une quelconque des revendications 1 à 7 avec une composition aqueuse, en particulier une solution aqueuse, comprenant au moins un élément choisi parmi les actinides et/ou les lanthanides, et ayant un pH supérieur ou égal à 3, en particulier supérieur à 3 ; et
(ii) optionnellement, une étape de mise en contact du support tel qu'obtenu à l'issue de l'étape précédente avec une solution aqueuse ayant un pH inférieur ou égal à 2,5, en particulier inférieur à 2,5, plus particulièrement d'environ 2.
